# EUROPEAN PATENT APPLICATION

(11) **EP 4 020 364 A1**
(43) Date of publication of application: **29.06.2022**
(21) Application number: 20217302.7
(22) Date of filing: 24.12.2020
(51) Int. Cl.: G06Q 40/00, G06Q 10/06

(54) **METHOD FOR CALCULATING AT LEAST ONE SCORE REPRESENTATIVE OF A PROBABLE ACTIVITY BREAKAGE OF A MERCHANT, SYSTEM, APPARATUS AND CORRESPONDING COMPUTER PROGRAM**

(71) Applicant: Banks and Acquirers International Holding, 75015 Paris (FR)
(72) Inventor: Pirson, Stephan, 1000 Bruxelles (BE)
(74) Representative: Vidon Brevets & Stratégie

(57) **Abstract**

The disclosure relates to a method for calculating at least one score representative of a probable activity breakage of a merchant, the method being implemented within an Activity breakage Detection System (ABDS), said Activity breakage Detection System (ABDS) being connected to a communication network (NTWK) through a communication network for obtaining (10), from several data sources (MAMS, CNCS, MPS, ODS), data representing activities of the merchant, the method comprising:
- A data cleaning step (20), performed by an external data collection unit EDCU, and delivering, on the basis of data collected from the data sources, for the merchant:
∘ at least one first time series (TS#1) representing a set of interactions of said merchant with a merchant account management system (MAMS), for a given time period;
∘ at least one second time series (TS#2) representing evolutions of transactions made by the merchant for said given time period;

- a compilation step, performed by the external data collection unit EDCU, and delivering, for the merchant, at least one set of aggregate statistics (AGF), based on said at least one time series (TS#2);
- a computation step (30), performed by an interaction sentiment analysis unit ISAU, delivering, from said at least one first time series (TS#1), at least one score representing sentiment of said merchant;
- a computation step (40) performed by a payment behavior analysis unit PBAU, delivering, from said at least one second time series (TS#2), at least one score representing transaction evolution;
- a prediction step (50), performed by a classification unit CLU, using said at least one score representing sentiment of said merchant, at least one score representing transaction evolution and said aggregate statistics (AGF), delivering said at least one score representative of a probable activity breakage of said merchant.

## Description

### 1. FIELD OF THE DISCLOSURE

The present disclosure relates generally to the detection of activity breakage and, more specifically, to processing techniques which use machine learning to identify the activity breakage of merchants and retailers (which uses the services of a provider).

### 2. BACKGROUND

Activity Breakage of merchants or economical entities, in its many forms (churn, insolvency, bankruptcy), is a problem of enormous magnitude and scope, causing billions of dollars in economic losses and impacting many millions of people. For example, an ever-increasing amount of activity breakage may be linked to online transactions made via the Internet, causing small and medium retailers to lose market shares. Bankruptcies leaves the company with open invoices to be paid for services rendered and goods delivered, or expose us to having to refund cardholders with chargebacks. At the same time, customers switching to another service provider cause us decreased revenue. The cost of acquisition of a new customer is likely to far exceed the cost of retaining an existing one. While it is possible to manually supervise the bigger customers, manually sifting through the hundreds of thousands of smaller merchants to determine which are likely to leave presents a challenge. In addition, pandemic situation also drives some merchants or retailers in economic difficulties finally leading to activity breakage.

Various software applications have been developed to detect the churn of one or more services and/or insolvency (bankruptcy). For example, financial statement, income statement settlement or global economic situation analysis has typically been used to flag a particular merchant or retailer. However, to ensure that most possible churn or insolvency cases are captured, these techniques can have low thresholds to trigger a churn or insolvency alert. As a result, many alerts are false positives. On the other hand, higher thresholds may not capture some real instances of churn or insolvency. To provide a solution to these gaps in the field of automated churn or insolvency detection, innovative processing techniques capable of reducing false positives are needed.

Other conventional processes related to attrition and insolvency are also resourced intensive. For example, service providers today perform manual reviews of transactions to determine whether, under some long and complex process, transactions made by a merchant are increasing or decreasing and what to expect of these thousands of daily transactions. These manual reviews are another significant burden on human resources and can be prone to human error. Additionally, not correctly identifying transactions can cost money to the service provider. Another example is the termination of one or more services and/or insolvency (bankruptcy) may sometimes not be discovered until the bankruptcy occurs. At that time, the losses may not be fully recoverable.

### 3. BRIEF SUMMARY

The present embodiments may, inter alia, automatically detect activity breakage. The detection may be based upon various types of information, and the rules used to detect such scenarios may be generated by a machine learning program. More specifically, it is disclosed a

Method for calculating at least one score representative of a probable activity breakage of a merchant, the method being implemented within an Activity breakage Detection System, said Activity breakage Detection System being connected to a communication network through a communication network for obtaining, from several data sources, data representing activities of the merchant, the method comprising:
- A data cleaning step, performed by an external data collection unit, and delivering, on the basis of data collected from the data sources, for the merchant:
   ∘ at least one first time series representing a set of interactions of said merchant with a merchant account management system, for a given time period;
   ∘ at least one second time series representing evolutions of transactions made by the merchant for said given time period;
- a compilation step, performed by the external data collection unit, and delivering, for the merchant, at least one set of aggregate statistics, based on said at least one time series;
- a computation step, performed by an interaction sentiment analysis unit, delivering, from said at least one first time series, at least one score representing sentiment of said merchant;
- a computation step performed by a payment behavior analysis unit, delivering, from said at least one second time series, at least one score representing transaction evolution;
- a prediction step, performed by a classification unit, using said at least one score representing sentiment of said merchant, at least one score representing transaction evolution and said aggregate statistics, delivering said at least one score representative of a probable activity breakage of said merchant.

In another aspect, the disclosure also relates to an Activity breakage Detection System for calculating at least one score representative of a probable activity breakage of a merchant, said Activity breakage Detection System being connected to a communication network through a communication network for obtaining, from several data sources, data representing activities of the merchant, the system comprising:
- An external data collection unit, for cleaning data, and delivering, on the basis of data collected from the data sources, for the merchant:
   ∘ at least one first time series representing a set of interactions of said merchant with a merchant account management system, for a given time period;
   ∘ at least one second time series representing evolutions of transactions made by the merchant for said given time period;
- the external data collection unit, performing a compilation of said at least one time series, delivering, for the merchant, at least one set of aggregate statistics;
- an interaction sentiment analysis unit, performing computation of said at least one first time series, delivering, at least one score representing sentiment of said merchant;
- a payment behavior analysis unit, performing computation of said at least one second time series, delivering at least one score representing transaction evolution;
- a classification unit, performing a prediction, using said at least one score representing sentiment of said merchant, at least one score representing transaction evolution and said aggregate statistics, delivering said at least one score representative of a probable activity breakage of said merchant.

According to one implementation, the different steps of the method according to the disclosure are implemented by one or more software programs or software module programs including software instructions intended for execution by at least one data processor of a device connected to directly or indirectly to the automatic speech recognition system.

Thus, another aspect of the present disclosure pertains to at least one computer program product downloadable from a communication network and/or recorded on a medium readable by a computer and/or executable by a processor, including program code instructions for implementing the method as described above. More particularly, this computer program product includes instructions to command the execution of the different steps of a method for processing data with respect to the disclosure.

This program can use any programming language whatsoever and be in the form of source code, object code or intermediate code between source code and object code, such as in a partially compiled form or any other desirable form whatsoever.

According to one embodiment, the methods/apparatus may be implemented by means of software and/or hardware components. In this respect, the term "module" or "unit" can correspond in this document equally well to a software component and to a hardware component or to a set of hardware and software components.

A software component corresponds to one or more computer programs, one or more subprograms of a program or more generally to any element of a program or a piece of software capable of implementing a function or a set of functions as described here below for the module concerned. Such a software component is executed by a data processor of a physical entity (terminal, server, etc.) and is capable of accessing hardware resources of this physical entity (memories, recording media, communications buses, input/output electronic boards, user interfaces, etc.).

In the same way, a hardware component corresponds to any element of a hardware unit capable of implementing a function or a set of functions as described here below for the module concerned. It can be a programmable hardware component or a component with an integrated processor for the execution of software, for example an integrated circuit, a smartcard, a memory card, an electronic board for the execution of firmware, etc.

In addition, the present disclosure also concerns a non-transitory computer-readable medium including a computer program product recorded thereon and capable of being run by a processor, including program code instructions for implementing the above-described method for processing data with respect to the disclosure.

The computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette, a hard disk, a read-only memory (ROM), an erasable programmable read-only memory (EPROM or Flash memory), a portable compact disc read-only memory (CD-ROM), an optical storage device, a magnetic storage device, or any suitable combination of the foregoing.

It is to be understood that both the foregoing general description and the following detailed description are exemplary and explanatory and are not restrictive of the disclosure, as claimed.

It must also be understood that references in the specification to "one embodiment" or "an embodiment", indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

### 4. BRIEF DESCRIPTION OF THE DRAWINGS

The Figures described below depict various aspects of the systems and methods disclosed herein. It should be understood that each Figure depicts an embodiment of a particular aspect of the disclosed systems and methods, and that each of the Figures is intended to accord with a possible embodiment thereof.
- **Figure 1** depicts an exemplary environment in which techniques for activity breakage detection, verification and/or classification may be implemented, according to one embodiment.
- **Figure 2** depicts an exemplary process flow for machine learning of activity breakage detection, verification and/or classification rules, according to one embodiment.
- **Figure 3** depicts an exemplary computer system in which the techniques described herein may be implemented, according to one embodiment.

### 5. DETAILED DESCRIPTION

### 5.1. Exemplary Activity breakage Detection and/or Classification

In some embodiments, an activity breakage detection and/or classification system can analyze data relating to a number of existing or potential financial accounts. Analysis/processing can be performed in batch processing operations, or substantially in real time *(e.g., when data is generated and*/*or financial transactions occur, etc.),* and the data can be obtained from a variety of sources based on depending on the particular embodiment and/or scenario. In one embodiment, for example, data from financial account records can be analyzed, with data indicative of vending activity of a merchant or retailer, location data (e.g., Global Positioning Satellite (GPS) data from a smartphone or vehicle of the merchant or retailer.) and/or other data, to determine if a particular situation is likely to result in unsubscribing (churn) and/or insolvency at short or medium term. The analysis can be performed automatically after the transactions have been made, or can be done in response to a merchant communication or an algorithm marking the transactions/refund/chargeback of a client for example.

The analysis may include determining whether the merchant or retailer has expressed dissatisfaction through customer service feedback (phone calls, emails) and/or determining whether transactions made by the merchant or retailer are consistent with merchant service habits. expenses/reimbursement associated with the merchant or retailer (e.g., spending habits identified using merchant or retailer transaction records). In the case of pooling data from multiple merchants (or retailers), accuracy can be improved by identifying expenditure/income models at the individual level in addition to the aggregate merchant category level. For example, a maximum amount of money typically credited/debited in a single transaction (e.g., over a window of several months, etc.) can be determined for each of several merchants listed on a single merchant category code, and the maximum amount for the merchant who would have received some relevant purchases can be compared to the mean purchases amounts to determine whether the activity breakage is likely to occur.

In another exemplary embodiment, the financial transaction data can be analyzed to determine whether the chargeback payments from the merchant or the acquiring bank to a card issuer may be appropriate in relation to a particular situation. For example, the transaction amount, similarity to other transactions and/or other information can be used to identify possible activity breakage. The analysis can be performed in response to a merchant reporting dissatisfaction with a service, for example.

In another exemplary embodiment, machine learning techniques can be used to analyze financial transactions for the purpose of classifying a potential activity breakage situation. For example, the machine learning program can be trained using activity breakage classifications made in relation to several other financial accounts. The machine learning program may learn, based on data types, tend to indicate different classifications (e.g., transaction amount, particular types of online activity data, etc.), and/or what values of data tend to indicate different classifications. (ex: transactions greater than 50 €/100 €/500 €, etc.), for example. Once a potential activity breakage category has been identified for a particular merchant, the classification can be used to facilitate or guide further analysis or investigation. Alternatively, or in addition, the classification can be used to calculate one or more measures indicating the prevalence of this type of activity breakage.

In an exemplary embodiment of the disclosure, a combination of neural networks and other machine learning algorithms and models are combined to allow determining ahead of time the likelihood that a customer is to go bankrupt (Insolvency), or switch to another service provider (Churn).

A deep neural network is used to extract meaningful changes from some series of transactions, refunds and chargebacks made by the merchant. Another deep neural network is used to extract tone and subject of inquiry from merchant interactions with service representatives.

Then both of them, along with summary statistics and other relevant information (e.g. merchant category code) are combined in a gradient boosted tree to produce a global score.

By replacing conventional processing techniques with one or more of the processing techniques described herein, problems that have plagued the field of activity breakage detection, classification and/or prevention in the past may be significantly reduced or eliminated. For example, information that has traditionally been overlooked or ignored can be used to more accurately detect, prevent and/or categorize activity breakage score, and/or to reduce false positives (or true negatives) and/or insolvency alerts. As another example, a significant amount of time can be saved by removing the need for manual actions (manual actions are not even possible when transaction exceeds a given number of transactions per day/month), or reducing the number of instances where manual actions are needed, especially for small businesses (small merchants or retailers).

Moreover, those skilled in the art will appreciate that at least some of the technical advancements described below (and/or shown in the accompanying figures) are not necessarily restricted to the financial field.

### 5.2. Exemplary Environment for Implementing Activity breakage Detection and/or Classification Processing System

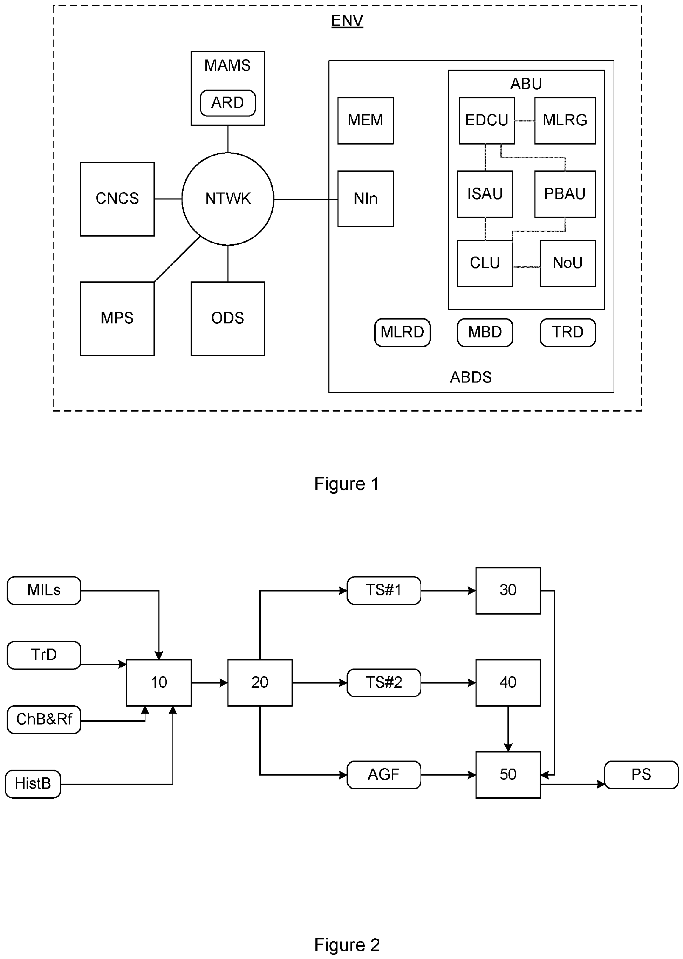

FIG. 1 represents an example of an environment ENV in which techniques for detecting and/or classifying activity breakage can be implemented, according to one embodiment. The environment ENV may include a Activity Breakage Detection System (ABDS), a Merchant Account Management System MAMS, a Card Network Computer System CNCS, a number of merchant computer systems MPS (i.e. payment terminals/ payment hardware/payment software), a number of other sources ODS, and a network NTWK. Note that, in other embodiments and/or scenarios, the environment ENV may include more, less, and/or different components than those shown in Figure 1, such as any of those described elsewhere here. For example, environment ENV may include one or more additional merchant account management systems and/or card network computer systems. As another example, the environment ENV may include a computer system of one or more acquiring/merchant banks, and some or all of the communications with the merchant computer systems MPS described below may instead be with financial institutions used by the merchants.

The Merchant Account Management System (MAMS) MAMS may be associated with (e.g., owned and/or managed by) a bank or other financial entity. For example, the merchant account management system MAMS may be a bank which acts as a card issuer associated with a particular type of card network (e.g., VISA^{®}, Mastercard^{®}, etc.), and/or an entity that provides loans (e.g. mortgage, home equity, vehicle, etc.), savings/checking account services, and/or other financial services to merchants. The merchant account management system MAMS may maintain an account record database ARD that stores various types of account information, including information about the merchant (e.g., names, addresses, etc.) and data indicating financial transactions/refund/chargebacks made in relation to each account (e.g., dates, amounts and merchants for credit or debit transactions, etc.). The account record database ARD may store account information for all or part of the merchant associated with the merchant's computing devices, for example. Although shown in Fig. 1 as a single entity in the merchant account management system MAMS, it is understood that the account record database ARD may, in some embodiments, be distributed over multiple databases. and/or multiple physical/hardware memories, and/or may be wholly or partially external (e.g., remote from) merchant account management system MAMS.

The Activity breakage Detection System ABDS can generally provide services that help detect and/or categorize activity breakage (churn and/or potential (in)solvency activity) in relation to existing merchant accounts, such as accounts managed by the merchant account management system MAMS. In some embodiments, the activity breakage detection system ABDS is included in the merchant account management system MAMS. As shown in FIG. 1, the activity breakage detection system ABDS may include a network interface Nln, a memory MEM, and activity breakage detection/classification unit ABU.

Network interface Nln may include hardware, firmware, and/or software configured to allow activity breakage detection system ABDS to exchange electronic data with one or more other components in environment ENV through the system network NTWK. For example, network interface Nln may include an Ethernet port, modem, router and/or one or more other ports and/or transceivers for one or more other wired and/or wireless communication technologies.

Memory MEM may be a non-transient, computer-readable storage unit or device, or a collection of units/devices, and may include persistent (e.g., a hard drive) and/or non-persistent memory components. The memory MEM may store instructions which are executable on one or more processors of the activity breakage detection system ABDS (not shown in Fig. 1) to perform various operations, including the instructions of various software applications and the data. generated and/or used by these applications.

The card network computer system CNCS may be a computer system (e.g., one or more servers) of a credit and/or debit card network entity, such as VISA^{®} or Mastercard^{®}, for example. In some embodiments and/or scenarios where the card network entity also acts as an issuer (e.g., American Express^{®} or Discover^{®}), the card network computer system CNCS may include Merchant Account Management System (MAMS). The card network computer system CNCS can provide various services to the Merchant Account Management System MAMS and/or to the activity breakage detection system ABDS. For example, the card network computer system CNCS may provide electronic updates of chargeback and/or chargeback rules.

Each of the merchant computing systems MPS may include one or more computing devices associated with a particular provider of products and/or services. For example, some or all of the merchant computer systems MPS may include servers associated with online retailers. Alternatively, or in addition, some or all of the merchant computer systems MPS may include payment terminal, point-of-sale terminal devices providing credit card and/or debit card payment processing functionality for "card-present" transactions. In some embodiments environment ENV may omit merchant computer systems MPS (for example when data are provided by the card network computer system CNCS, or by the Merchant Account Management System MAMS).

The other sources ODS may include computing devices and/or systems associated with sources of one or more other types of information. For example, other sources ODS may include vehicle telematics systems, one or more Internet service providers (ISPs) (for example, ISPs providing Internet access to some or all merchants), *"Smart Merchant"* system devices (e.g., installed on the premises of some or all merchants delivering customer traffic at merchant premises) and/or other systems/devices. In some embodiments, environment ENV does not include other sources ODS.

Network NTWK may communicatively couple some or all of the components shown in Figure 1. For example, merchant account management system MAMS may use network NTWK to communicate with activity breakage detection system ABDS, card network computer system CNCS and/or the merchant's computer systems MPS. As another example, the activity breakage detection system ABDS may use the network NTWK to communicate with the merchant account management system MAMS, the system card network computing CNCS, merchant computing systems MPS and/or one or more of the other sources ODS. As a single entity in Fig. 1, network NTWK may include multiple communication networks of one or more types (e.g. one or more wired and/or wireless local area networks (LAN), and/or one or more wired and/or wireless wide area networks (WAN) such as the Internet). Additionally, network NTWK may use partially or entirely separate network components to support communications between different endpoints or computing devices, such as wireless communication or data transmission over one or more radio frequency links and/or wireless communication channels. For example, the portion or portions of the network NTWK used for communications between the merchant account management system MAMS and the activity breakage detection system ABDS may be the same or different from the portion or portions of the network NTWK used for communications between merchants. Account management system MAMS on one or more radio links or wireless communication channels, or between the activity breakage detection system ABDS and one or more of the other sources ODS, etc. Those skilled in the art will appreciate different types of networks suitable for network NTWK, depending, for example, on how the activity breakage detection system ABDS, the merchant account management system MAMS and/or the bank account management system. other components of the environment ENV are located or distributed over a relatively large geographical area.

As a general rule, the activity breakage detection/classification unit ABU of the activity breakage detection system ABDS can detect a possible activity breakage situation, confirm whether the Suspected or reported activity breakage are possible, and/or classify the activity breakage activity. For example, the activity breakage detection/classification unit ABU may analyze sets of transactions, events and/or reports stored in the account record database ARD to determine whether that set of transactions is, or potentially is likely to drive to a activity breakage situation. Alternatively, the activity breakage CLU detection/classification unit ABU may analyze only those set of transactions that have been flagged as possibly activity breakage (for example, by the merchant account management system MAMS or the activity breakage detection system ABDS generating a preliminary activity breakage alert after applying a first set of rules to a set of transactions, events, reports, etc.). The activity breakage detection/classification unit ABU may also, or instead, support additional functionality, such as that described below in connection with the various components of the activity breakage detection/classification unit ABU shown in Figure 1.

As shown in Fig. 1, the activity breakage detection/classification unit ABU may include a machine learning (ML) rule generator MLRG, an external data collection unit EDCU, an interaction sentiment analysis unit ISAU, a payment behavior analysis unit PBAU, a classification unit CLU and a notification unit NoU. In other embodiments, the activity breakage detection/classification unit ABU may include plus, minus and/or different components/units thereof. shown in Figure 1. In some embodiments, each of the ML rule generator MLRG, the external data collection unit EDCU, the interaction sentiment analysis unit ISAU, payment behavior analysis unit PBAU, classification unit CLU (Gradient Boosted Trees), notification unit NoU, and/or other units or components of the detection unit/activity breakage classification ABU may be a software component stored in memory MEM and implemented by one or more processors of one or more computing devices (e.g., servers) included in Activity breakage detection system ABDS.

ML rule generator MLRG can generally analyze various types of data to generate and/or update activity breakage detection and/or classification rules to be applied by the activity breakage detection/classification unit ABU and stored in an ML rules database MLRD. As discussed in more detail below, the rules can be used to detect and/or categorize a single type or category of activity breakage activity, or can be widely used under multiple types. or categories of activity breakage activity. The ML rule generator MLRG can implement any type or suitable types of machine learning. For example, the ML rule generator MLRG can implement supervised learning techniques, such as decision trees, regression-based models, support vector machines (SVM) and/or neural networks, and/or unsupervised learning techniques such as Dirichlet process mixing models and/or k-means clustering. Other machine learning techniques are also possible, such as techniques using Bayesian networks, "deep learning" techniques, etc. Although shown in Fig. 1 as a single entity in the activity breakage detection system ABDS, it is understood that the ML rule database MLRD may, in some embodiments, be distributed over multiple databases. data and/or several physical/hardware memories, and/or can be totally or partially external (for example, remote from) the activity breakage detection system ABDS.

The external data collection unit EDCU can generally collect, via the network interface Nln and/or from sources internal to the activity breakage detection system ABDS, information (e.g. transaction and/or refund and/or chargeback and/or behavior) from various sources (for example, the merchant account management system MAMS, other sources ODS, etc.), and clean, align and provide this data to other parts of the activity breakage detection system ABDS as needed (for example, to the ML rule generator MLRG to generate and/or update the rules, and/or to the interaction sentiment analysis unit ISAU, to the payment behavior analysis unit PBAU and/or the classification unit CLU (Gradient Boosted Trees) for detecting and/or classifying the activity breakage outbreak or opening). Some data may be collected indirectly. For example, the merchant account management system MAMS may collect transaction data from the computer systems of the merchant MPS (and/or the acquiring banks associated with one or more of the merchant's computer systems MPS), and the external data collection processing unit EDCU can then collect this data from the Merchant Account Management System MAMS Records Database ARD.

Once an initial set of rules has been generated and stored in the ML rules database MLRD, these rules may dictate some or all of the types of data collected by the external data collection unit EDCU. In some embodiments, however, the external data collection unit EDCU collects a wide range of data types that may or may not be relevant for determining or classifying activity breakage score, and the ML Rules MLRG continuously analyzes this data to determine the most predictive data types of activity breakage and/or type or class of insolvency.

The interaction sentiment analysis unit ISAU can generally analyze the merchant information (or other merchant related information) to identify patterns of behavior, which can then be used by the activity breakage detection/classification unit ABU to detect and/or categorize changes in the merchant behavior. For example, the interaction sentiment analysis unit ISAU may analyze information obtained from the account record database ARD to identify whether customers interacting with support staff expressing have expressed displeasure, or inquired about changes in pricing, or requesting payment delays. The operation of the interaction sentiment analysis unit ISAU, including the types of information analyzed and how that information is used to arrive at a result (e.g., a behavior model), can be dictated by the rules. stored in the ML MLRD rule database.

Data indicating the behavior patterns identified by the interaction sentiment analysis unit ISAU may be stored in a merchant behavior database MBD, for example. Although shown in Fig. 1 as a single entity in the activity breakage detection system ABDS, it is understood that the merchant behavior database MBD may, in some embodiments, be distributed over multiple databases and/or multiple physical/hardware memories, and/or may be totally or partially external (e.g., remote from) the activity breakage detection system ABDS. In one embodiment, for example, the A merchant behavior database MBD may be included in Account Record Database ARD. In still other embodiments, Environment ENV may not include merchant behavior database MBD, and behavior patterns can only be identified by the interaction sentiment analysis unit ISAU *"on the fly"* as needed by the detection/classification unit activity breakage ABU (e.g., when necessary to analyze a set of transactions in view of the past habits of a particular merchant, etc.).

In some embodiments, the interaction sentiment analysis unit ISAU may separately analyze the behavior associated with each merchant, even if there is more than one merchant for a particular aggregate account. For example, the interaction sentiment analysis unit ISAU can independently analyze the interactions of each merchant (retailer). The activity breakage detection/classification unit ABU can then use the individual expenditure models when detecting and/or classifying activity breakage.

The payment behavior analysis unit PBAU can generally analyze sets of financial transactions and/or other information to identify evolution of the financial activity of the merchant. For example, the payment behavior analysis unit PBAU may analyze the information obtained from the account record database ARD to determine whether there are evolutions in the payment behavior/actions of customers of the merchant relatively to the Merchant Account Management System MAMS. The operation of the payment behavior analysis unit PBAU, including the types of information analyzed and the ways in which this information is used to arrive at a result (for example, time windows for considering the set of transactions), may be dictated by stored rules. in the ML rule database MLRD. The ML rule generator MLRG can use sets of transactions obtained from a card network entity (e.g., from the card network computer system CNCS), and stored in the transaction rule database TRD, to generate and/or update the rules applied by the payment behavior analysis unit PBAU.

In some embodiments, the payment behavior analysis unit PBAU (or other component of the activity breakage detection/classification unit not shown in Figure 1) automatically, with little or no feedback/manual entry/assist, apply transaction rules from transaction rule database TRD for each set of transactions. Although shown in Figure 1 as a single entity in the activity breakage detection system ABDS, it is understood that the transaction rule database TRD may, in some embodiments, be distributed over multiple bases. data and/or several physical/hardware memories, and/or can be totally or partially external (for example, remote from) the activity breakage detection system ABDS.

Classification unit (Gradient Boosted Tree) CLU can generally analyze broad categories of data from various sources (e.g., account record database ARD, merchant computer systems MPS and/or other sources ODS) to categorize/classify the types of activity suspected of unsubscribing and/or insolvency. Classification unit CLU may classify activity breakage outbreak or situation only within a particular subset of activity breakage situations (for example, by classifying card transactions as involving a potential case of activity breakage, etc.). In some embodiments, the classification unit CLU classifies the suspected activity breakage situation in relation to a particular account or set of transactions in response to notification of changing activity (e.g., notified by another component of the activity breakage detection/classification unit ABU, or by manual user input, etc.). In other embodiments, the classification unit CLU itself (or another component of the activity breakage detection/classification unit ABU) identifies suspicious activity.

The notification unit NoU can generally provide alerts, confirmations and/or other notifications to various people (e.g., staff members, bank employees associated with the merchant account management system MAMS, third party employees associated with the activity breakage detection system ABDS, etc.). For example, the notification unit NoU may generate a notification message indicating that an activity breakage alert associated with a particular merchant activity is a false positive, and causes the network interface Nln to send the message to a computer terminal or to the merchant account management system. MAMS for display to a system user. As another example, the notification unit NoU can cause the network interface Nln to send to a computer for display to a user of the system.

The operation of various components of the environment ENV shown in Fig. 1, according to different embodiments and/or scenarios, will be described in more detail below in relation to the remaining figures.

### 5.3. Exemplary Embodiment for Implementing Activity breakage Detection and/or Classification Processing Techniques

Figure 2 depicts an exemplary process flow for machine learning of activity breakage detection, verification and/or classification rules, according to one embodiment. In order to predict activity breakage, the activity breakage detection system ABDS captures change in behavior or similarity to other behavior that have been seen to lead to activity breakage (churn, insolvency, bankruptcy or the like) in other merchants in the past.

The disclosure determines that relevant information to do so can be: the number and amounts of the payment transactions performed with the merchant; the number of refunds to cardholders performed by the merchants; the number of contested transactions (chargebacks) raised by cardholders against the merchant; whether merchants interacting with support staff expressing have expressed displeasure, or inquired about changes in pricing, or requesting payment delays.

The external data collection unit EDCU of the ABU collects (10), via the network interface and from external sources information (e.g., transaction and/or refund and/or chargeback and/or behavior), namely:
- Merchant interaction logs (MILs);
- Transaction Data (TrD);
- Chargebacks and Refunds (ChB&Rf);
- Historical Churn and Bankrupties (Hist).

The external data collection unit EDCU cleans and align data. More specifically, the source of information for the sentiment analysis (i.e. (MILs)) is a flat file with three columns: date, customer statement (email), customer service response (if any). The external data collection unit EDCU cleans this flat file by removing un relevant information (i.e., unwanted characters or formatting elements) and aligns it so a to produce first (set of) time series (TS#1), of a given number of customers, with a given number of data points and for a given length period.

The source of information for transaction analysis is a flat file combining transaction data, chargebacks and refunds. The source of information for the sales, chargeback, and refunds time series can, for each, be a file with three columns: date, amount, number of transactions. The external data collection unit EDCU cleans this flat file and aligns it so as to produce second time series (TS#2), of a given number of customers, six time series per customer and for a given length period.

The summary statistics used as direct input for the gradient boosted tree are called aggregate features (AGF) and also comprise merchant information (given number of customers, six time series per customer and for a given length period).

The interaction sentiment analysis unit ISAU computes (30) the first time series (TS#1) so as to produce a sentiment score. The interaction sentiment analysis unit ISAU implements pre-trained existing neural networks to generate "word embeddings", i.e., abstract representations of the words combined with a custom trained neural network to classify the sentiments of customers in their interaction with the customer service of the payment service provider.

The payment behavior analysis unit PBAU computes (40) the second time series (TS#2) so as to produce a transaction evolution score. The payment behavior analysis unit PBAU implements pre-trained existing neural networks to capture change in payment behavior and infer from it *"health state"* of the customers (whether their business are flourishing or floundering) both per se and the *"health state"* relative to other businesses of the same time as learned by the neural network. The neural network can use "Transform" type of architecture.

Both results of the interaction sentiment analysis unit ISAU and the payment behavior analysis unit PBAU along with aggregate features and merchant information AGF are provided to the classification unit CLU, which process (50) these data, implementing a gradient boosted tree, to deliver a score representing the probability a given customer is likely to be an activity breakage situation.

Using the score produced by the classification unit CLU, the notification unit NoU can for example alert customer service which could take action and prevent the churn from happening in case of customer dissatisfaction with the service, or with the pricing. Details explanations on the technical functioning of the units are provided herein below.

### 5.3.1. Data collection and alignment by the external data collection unit EDCU

EDCU collects data from MAMS, CNCS, MPS and other data sources (ODS). In this embodiment, the ECDU collects two types of data: on the one hand data from MAMS relating to interactions with the merchant and on the other hand transactional data.

The examples provided below are purely illustrative. They aim to better understand what is exposed. It is understood that in a real case, the quantity of data processed is such that it cannot be represented in a simple manner and that it cannot be processed in a reliable and efficient way by the application of a conventional mental process or treatment. Indeed, this data can number in the hundreds of thousands to millions of records ranges, and a human being may not be able to efficiently process such data to provide a result with the efficiency and speed expected. Indeed, for example in the case of bankruptcy, the probable situation of bankruptcy in the near future (three or six weeks for example) must be known as early as possible, before this situation occurs. If the analysis of the situation were to be entrusted, in a constant manner (i.e., to be reproduced on a daily basis for each merchant) to a human being, this one would not be able to have sufficient time and/or would not be able to perform these tasks efficiently. Moreover, if one wished to entrust such tasks to a group of human beings, thus multiplying the amount of work that they can perform, the fact remains that economically the costs associated with these human beings would be higher than the costs generated by activity breakage and therefore it would not be of economic interest. Finally, activity breakage situations can depend on a very large number of parameters, which vary from one situation to another and potentially unidentifiable simply by the usual rules. Neither can a human take into account such variations of parameters applicable to all possible situations leading to activity breakage. The solution provided by disclosure therefore makes it possible both to resolve the problem of efficiency (due to the hundreds of thousands of data records to be processed), of early detection of potential activity breakage and that the whole is economically acceptable.

### 5.3.1.1. MILs Data

MILs data is interaction monitoring data, coming from MAMS, and includes for example incoming and outgoing communication, regardless of the form of communication: it may be electronic mail communication (incoming from the merchant or outgoing, from customer service). It can also be the transcription of a telephone conversation. Telephone conversation transcription can be implemented through a dedicated component (not shown in Figure 2). From the collected data, the EDCU performs a cleansing of this data and a formatting of it to build the first set of time series (TS # 1). Three examples of time series are presented here:

| TS#1_1 | 03/04/2020 | 04/04/2020 | 08/08/2020 | 09/08/2020 | 10/08/2020 |
|---|---|---|---|---|---|
| Merchant A | My terminal doesn't work, there's an error message 1234 | Dear Sir, please follow this procedure: <link to procedure> | I'm getting the error 1234 again, please fix or I cancel my contract | Dear Sir, please follow this procedure: <link to procedure> | Are you even reading my message? Procedure didn't work. I'm not happy. |
| | Email From User | Email To User | Email From User | Email To User | |

| TS#1_2 | 03/04/2020 | 03/05/2020 | 07/05/2020 | 08/05/2020 | |
|---|---|---|---|---|---|
| Merchant B | Customer called enquiring about process to negociate pricing, explained competitors offer a better price. | Customer called again asking for better terms | Customer pricing review | new contract terms declined. | |
| | Call From Customer | Call From Customer | Customer Service Log | Customer Service Log | |

| TS#1_3 | 03/04/2020 | 04/04/2020 | 05/05/2020 | | |
|---|---|---|---|---|---|
| Merchant C | My terminal doesn't work, there's an error message 1234 | Dear Sir, please follow this procedure: <link to procedure> | Thank you! That solved my issue | | |
| | Email From User | Email To User | Email From User | | |

These three examples from the first time series illustrate the shape of the data that is fed to the ISAU sentiment analysis unit interaction (which is illustrated below). It should be noted, according to the disclosure, that the absence of data can be as important as the presence of data. Indeed, as it becomes apparent later, for example in the context of the series TS # 1_3, the fact of not having any exchanges after the third email, which is rather positive, is good news in relation to the market sentiment analysis.

### 5.3.1.2. TRD, ChB&Rf Data

These data come either from MAMS, CNCS or MPS. This is transaction data. Typically the payment transaction data includes for a given transaction, the identification of the merchant, the date of the transaction and its amount. For refund transactions, the situation is the same: identification of the merchant, refund amount and date. These two types of transaction (payment / refund) are those that are carried out by the merchant himself as part of his daily activity: the payment transaction relates to products (or services) sold by the merchant while the Refund transaction refers to products (or services) reimbursed by the merchant himself (that is, the merchant has agreed to reimburse). This is not the case with chargebacks, which follow a particular procedure: in this case, it is not the merchant who agrees to reimburse, but the issuer of the bank card (visa^{®}, Mastercard^{®}) which are requested, by the customer (final customer), to obtain a reimbursement for an unprovided product or service. Chargeback data has the same form as payment or refund transaction data: merchant identification, amount and date.

EDCU uses this data, to produce sets of time series. More specifically, for a given merchant, six time series are built on the basis of the TrD, ChB & RF data. An example of the six time-series (produced for one merchant, and for a given number of day) is provided in the following table:

| | | | | | | | | |
|---|---|---|---|---|---|---|---|---|
| number of refunds | 33 | 64 | 65 | 42 | 37 | 44 | 41 | 67 |
| amount of refunds | 4608,98 | 5737,31 | 5623,67 | 3861,47 | 4189,9 | 3411,28 | 4470,1 | 5678,66 |
| Number of sales | 15 944 | 20 169 | 20 843 | 20 343 | 20 619 | 18 953 | 16 008 | 17 428 |
| amount of sales | 1423 583,26 | 1 776 683,59 | 1 857 349,79 | 1 862 690,50 | 1 711 380,11 | 1 643 844,45 | 1 361 114,45 | 1 627 588,16 |
| number of chargebacks | 0 | 0 | 1 | 2 | 2 | 0 | 0 | 0 |
| amount of chargebacks | 0 | 0 | 25,00 | 205,40 | 200,40 | 0 | 0 | 0 |

These time series are "aligned": this means that the dates relating to these time series, at least for learning of the model (see below), are changed so that these dates correspond to a time period set for learning. Again, in this example, a very limited amount of data is presented. In a real implementation, each time series covers a period of several months, or even several years (one to two years), align to a given end-date. The six time series calculated, for each merchant, constitute the set of times series provided to the PBAU. These six times series (number of refunds, amount of refunds, Number of sales, amount of sales, number of chargebacks, amount of chargebacks) are specifically those identified by the inventors as being important in the determination, by PBAU, of data representative of the evolution of the merchant's activity, in order to determine the possible activity breakage.

### 5.3.1.3. HistB Data

HistB data is used in "learning" mode (see below). This data identifies the history of insolvency and/or churn that has occurred in the past, with a set of merchants. They include in particular the identification of the merchant, the date of the churn or the insolvency, but also other data relating to the merchant such as the MCC (merchant category code), the size of the company (small business, on line merchant, etc.). These data are used, for example in an automated manner, to enable learning of the activity breakage score. For example, for the "Merchant A" of TS # 1_1 previously presented, the churn date is provided in this HistB. In learning mode, the system is therefore be able to correlate this churn with the time series TS # 1_1.

### 5.3.1.4. AGF Data

According to the disclosure, the inventors also determined that, in addition to times series provided to PBAU and ISAU, additional complementary aggregate data was needed so as to actually predict activity breakage score in an accurate way.

Aggregate data, also called summary statistics, are used as direct input for the gradient boosted tree (step 50, by the CLU). According to an embodiment a "Time Series Feature extraction based on scalable hypothesis tests" is made on sets of time series TS#2, after these time series are produced by EDCU. An existing software package may be used to expedite the calculation of these summary statistics. The important feature is that, for each time series (number of refunds, amount of refunds, Number of sales, amount of sales, number of chargebacks, amount of chargebacks) an important number of statistics are obtained (roughly 5000). For each sets of time series (i.e., for each merchant), it is thus about 30000 statistics which are obtained. This is a broad scope approach to time series transformation: Average, median, standard deviation, skew, kurtosis, entropy, ADF Autocorrelation, trend, seasonality, Fourier Transform, 1st and 2nd derivative (partial or not), Changed quantiles, Split/Chunk, etc.

These statistics are provided, either in learning mode or in production mode, to the ICU, along with the results provided by PBAU and ISAU, so as to determine the activity score.

### 5.3.2. Sentiment Analysis Score produced by the interaction sentiment analysis unit ISAU

As will have been understood, ISAU has two different operating modes: a "learning" type of operating mode, in which sets of time series (TS # 1) are provided and an operating mode said of "production", in which a time series (TS # 1), of a given length is provided to obtain a result.

In the first "learning" operating mode, conventionally, in this embodiment, supervised learning is performed. More specifically, the sentiment perceived by the merchant in the communication suite is already provided to ISAU, which must therefore learn, from the input data provided, the expected result (coming from example from HistB data). The parameters of the learning are then recorded by the MLRD, through the MLRG.

In the second operating mode ("production"), a single time series is provided to ISAU, which uses the learning parameters recorded within the MLRD, through the MLRG, to deliver a series of data representative of the "sentiments" expressed by the merchant.

The following three tables are examples of representative data of the "sentiments" obtained by ISAU, in the case of the three interaction examples presented above (TS # 1_1, TS # 1_2, TS # 1_3):

| | ISAU output | | | |
|---|---|---|---|---|
| TS#1_1 | 0,17 | 0,3 | 0,2 | -0,48 |
| TS#1_2 | 0.8 | 0.3 | 0.2 | -0.1 |
| TS#1_3 | 0.1 | 0.5 | 0.76 | 0.9 |

Actually, the neural network extracts from the text content relevant information that represents the nature and interaction with the merchant, their frequency, the customer's satisfaction, etc. The product of this analysis is represented by a vector of digits (for example, 4 digits, actually about 20) that summarize these interactions. These figures are an abstraction and do not necessarily represent something humanly understandable.

### 5.3.3. Transaction Data Analysis score produced by the payment behavior analysis unit PBAU

As will have been understood, PBAU has two different operating modes: a "learning" operating mode, in which sets of time series (TS # 2) (for several merchants) are provided. and a so-called "production" mode, in which a set of time series (TS # 2) (of a single merchant), of a given length is provided to obtain a result.

In the first "learning" operating mode, conventionally, in this embodiment, supervised learning is performed. More specifically, the evolution of the merchant's activity is provided to PBAU, which must therefore "learn", from the input data provided, the expected result (activity breakage). The learning parameters are then recorded by the MLRD, through the MLRG.

In the second of "production" operating mode, a single set of time series is provided to PBAU (six time series, as previously described), which uses the learning parameters stored within the MLRD, by the intermediary of the MLRG, to deliver a data series (one per time series of all six time series) representative of an activity score, one by time series or an aggregate one, for the six time series of a merchant. This or these activity scores are then provided to the CLU.

### 5.3.4. final score produced by the classification unit CLU (Gradient Boosted Trees)

CLU also has two different operating modes: a "learning" operating mode, in which sets of data (for several merchants) are provided and a so-called "production" mode, in which a set of data (of a single merchant), of a given length is provided to obtain a final score.

In the first "learning" operating mode, conventionally, in this embodiment, supervised learning is performed. More specifically, the evolution of the merchant's activity is provided to CLU, which must therefore "learn", from the input data provided, the expected result (activity breakage coming from example from HistB). The learning parameters are then recorded by the MLRD, through the MLRG.

In the second of "production" operating mode, a single set of time series is provided to CLU, which uses the learning parameters stored within the MLRD, by the intermediary of the MLRG, to deliver a representation of an activity breakage score which is the processed by the notification unit NoU.

### 5.4. Other features, advantages and technical aspects

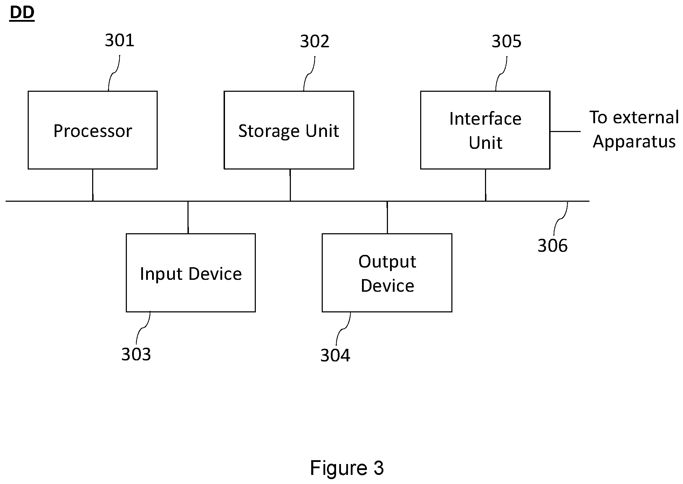

Figure 3 shows a schematic block diagram illustrating an example of a device DD according to an embodiment of the present disclosure. In some embodiments, the device DD is connected to or embedded into a communication device (development environment, database server, cloud-based service) configured for processing database. In another embodiment, the device DD is implemented on a cloud infrastructure service, alongside with a distant database server for example. Whatever the embodiment considered, the device DD is connected to Database server, either directly or indirectly through a communication device.

Referring back to figure 3, the device DD includes a processor 301, a storage unit 302, an input device 303, an output device 304, and an interface unit 305 which are connected by a bus 306. Of course, constituent elements of the device DD may be connected by a connection other than a bus connection using the bus 306.

The processor 301 controls operations of the device DD. The storage unit 302 stores at least one program to be executed by the processor 301, and various data, including for example parameters used by computations performed by the processor 301, intermediate data of computations performed by the processor 301 such as basic database statistics, column headers of various tables. The processor 301 is formed by suitable hardware, or software, or a combination of hardware and software. For example, the processor 301 is formed by dedicated hardware such as a processing circuit, or by a programmable processing unit such as a CPU (Central Processing Unit) that executes a program stored in a memory thereof.

The storage unit 302 is formed by any suitable storage or means capable of storing the program, data, or the like in a computer-readable manner. Examples of the storage unit 302 include non-transitory computer-readable storage media such as semiconductor memory devices, and magnetic, optical, or magneto-optical recording media loaded into a read and write unit. The program causes the processor 301 to perform a method for detecting an audio adversarial attack with respect to a voice input processed by an automatic speech recognition system according to an embodiment of the present disclosure as described previously. More particularly, the program causes the processor 301 to perform statistics extraction and compilation from the database, text classification on the basis of column headers, and final projection, thanks to random forest module to a predetermined category on the basis of enriched statistics and preliminary data categories.

The input device 303 is formed for example by a keyboard or a mouse, when needed.

The output device 304 is formed for example by a processing unit configured to take decision regarding whether or not a column header is considered as belonging to a predetermined category, as a function of the result of the final projection for this column and for example a predetermined threshold.

The interface unit 305 provides an interface between the device DD and an external apparatus and/or system. The interface unit 305 is typically a communication interface allowing the device to communicate with other devices connected to a network, such as database servers. The interface unit 305 may be used to obtain the database statistics thru a dedicated API. The interface unit 305 may also be used to transmit a result of a projection, for a column or a set of columns of one or several tables in a database.

Although only one processor 301 is shown on figure 3, it must be understood that such a processor may include different modules and units embodying the functions carried out by device DD according to embodiments of the present disclosure. These modules and units may also be embodied in several processors 301 communicating and co-operating with each other.

While the disclosure has been described with reference to exemplary embodiments, it is to be understood that the disclosure can be embodied in various forms, and is not to be limited to the examples discussed above.

One or more aspects of the disclosure may be embodied in computer-usable data or computer-executable instructions, such as in one or more program modules, executed by one or more computers or other devices to perform the operations described herein. Generally, program modules include routines, programs, objects, components, data structures, and the like that perform particular tasks or implement particular abstract data types when executed by one or more processors in a computer or other data processing device. The computer-executable instructions may be stored as computer-readable instructions on a computer-readable medium such as a hard disk, optical disk, removable storage media, solid-state memory, RAM, and the like. The functionality of the program modules may be combined or distributed as desired in various embodiments. In addition, the functionality may be embodied in whole or in part in firmware or hardware equivalents, such as integrated circuits, application-specific integrated circuits (ASICs), field programmable gate arrays (FPGA), and the like. Particular data structures may be used to more effectively implement one or more aspects of the disclosure, and such data structures are contemplated to be within the scope of computer executable instructions and computer-usable data described herein.

Various aspects described herein may be embodied as a method, an apparatus, or as one or more computer-readable media storing computer-executable instructions. Accordingly, those aspects may take the form of an entirely hardware embodiment, an entirely software embodiment, an entirely firmware embodiment, or an embodiment combining software, hardware, and firmware aspects in any combination. In addition, various signals representing data or events as described herein may be transferred between a source and a destination in the form of light or electromagnetic waves traveling through signal-conducting media such as metal wires, optical fibers, or wireless transmission media (e.g., air or space). In general, the one or more computer-readable media may be and/or include one or more non-transitory computer-readable media.

As described herein, the various methods and acts may be operative across one or more computing servers and one or more networks. The functionality may be distributed in any manner, or may be located in a single computing device (e.g., a server, a client computer, and the like). For example, in alternative embodiments, one or more of the computing platforms discussed above may be combined into a single computing platform, and the various functions of each computing platform may be performed by the single computing platform. In such arrangements, any and/or all of the above-discussed communications between computing platforms may correspond to data being accessed, moved, modified, updated, and/or otherwise used by the single computing platform. Additionally, or alternatively, one or more of the computing platforms discussed above may be implemented in one or more virtual machines that are provided by one or more physical computing devices. In such arrangements, the various functions of each computing platform may be performed by the one or more virtual machines, and any and/or all of the above-discussed communications between computing platforms may correspond to data being accessed, moved, modified, updated, and/or otherwise used by the one or more virtual machines.

Aspects of the disclosure have been described in terms of illustrative embodiments thereof. Numerous other embodiments, modifications, and variations within the scope and spirit of the appended claims will occur to persons of ordinary skill in the art from a review of this disclosure. For example, one or more of the steps depicted in the illustrative figures may be performed in other than the recited order, and one or more depicted steps may be optional in accordance with aspects of the disclosure.

## Claims

1. Method for calculating at least one score representative of a probable activity breakage of a merchant, the method being implemented within an Activity breakage Detection System (ABDS), said Activity breakage Detection System (ABDS) being connected to a communication network (NTWK) through a communication network for obtaining (10), from several data sources (MAMS, CNCS, MPS, ODS), data representing activities of the merchant, the method comprising:
- A data cleaning step (20), performed by an external data collection unit EDCU, and delivering, on the basis of data collected from the data sources, for the merchant:
∘ at least one first time series (TS#1) representing a set of interactions of said merchant with a merchant account management system (MAMS), for a given time period;
∘ at least one second time series (TS#2) representing evolutions of transactions made by the merchant for said given time period;
- a compilation step, performed by the external data collection unit EDCU, and delivering, for the merchant, at least one set of aggregate statistics (AGF), based on said at least one time series (TS#2);
- a computation step (30), performed by an interaction sentiment analysis unit ISAU, delivering, from said at least one first time series (TS#1), at least one score representing sentiment of said merchant;
- a computation step (40) performed by a payment behavior analysis unit PBAU, delivering, from said at least one second time series (TS#2), at least one score representing transaction evolution;
- a prediction step (50), performed by a classification unit CLU, using said at least one score representing sentiment of said merchant, at least one score representing transaction evolution and said aggregate statistics (AGF), delivering said at least one score representative of a probable activity breakage of said merchant.

2. The method, according to claim 1, **characterized in that** said at least one first time series (TS#1) comprises, one set of dated ordered records comprising text content of exchanges between the merchant and said merchant account management system (MAMS) relatively to a service provided by said merchant account management system (MAMS) to said merchant.

3. The method, according to claim 1, **characterized in that** the computation step (30), performed by the interaction sentiment analysis unit ISAU, implements at least one deep neural network so as to compute said at least one score representing sentiment of said merchant, from text content of exchanges between the merchant and said merchant account management system (MAMS), comprised in said at least one first time series (TS#1).

4. The method, according to claim 3, **characterized in that** the at least one deep neural network is a pretrained neural network using past activity breakage data (HistB) collected by said external data collection unit EDCU.

5. The method, according to claim 1, **characterized in that** said at least one second time series (TS#2) comprises, at least one set of dated ordered records belonging to the group comprising, for said given time period:
- number of refunds,
- amount of refunds,
- Number of sales,
- amount of sales,
- number of chargebacks,
- amount of chargebacks.

6. The method, according to claim 5, **characterized in that** said at least one second time series (TS#2) comprises all six-times series number of refunds, amount of refunds, Number of sales, amount of sales, number of chargebacks, amount of chargebacks.

7. The method, according to claim 1, **characterized in that** the computation step (40), performed by the payment behavior analysis unit PBAU, implements at least one deep neural network so as to compute said at least one score representing transaction evolution, from transaction data obtained from a card network computer system CNCS, and comprised in said at least one second time series (TS#2).

8. The method, according to claim 7, **characterized in that** the at least one deep neural network is a pretrained neural network using past activity breakage data (HistB) collected by said external data collection unit EDCU.

9. The method, according to claim 1, **characterized in that** the compilation step, performed by the external data collection unit EDCU, and delivering, for the merchant, at least one set of aggregate statistics (AGF), comprise time series feature extraction processing, based on scalable hypothesis tests, and made on said at least one second time series TS#2;

10. The method, according to claim 1, **characterized in that** the prediction step (50), performed by the classification unit CLU, implements a gradient boosted tree to produce said at least one score representative of a probable activity breakage of said merchant.

11. Activity breakage Detection System (ABDS) for calculating at least one score representative of a probable activity breakage of a merchant, said Activity breakage Detection System (ABDS) being connected to a communication network (NTWK) through a communication network for obtaining (10), from several data sources (MAMS, CNCS, MPS, ODS), data representing activities of the merchant, the system comprising:
- An external data collection unit EDCU, for cleaning data, and delivering, on the basis of data collected from the data sources, for the merchant:
∘ at least one first time series (TS#1) representing a set of interactions of said merchant with a merchant account management system (MAMS), for a given time period;
∘ at least one second time series (TS#2) representing evolutions of transactions made by the merchant for said given time period;
- the external data collection unit EDCU, performing a compilation of said at least one time series (TS#2), delivering, for the merchant, at least one set of aggregate statistics (AGF);
- an interaction sentiment analysis unit ISAU, performing computation of said at least one first time series (TS#1), delivering, at least one score representing sentiment of said merchant;
- a payment behavior analysis unit PBAU, performing computation of said at least one second time series (TS#2), delivering at least one score representing transaction evolution;
- a classification unit CLU, performing a prediction, using said at least one score representing sentiment of said merchant, at least one score representing transaction evolution and said aggregate statistics (AGF), delivering said at least one score representative of a probable activity breakage of said merchant.

12. A computer program product downloadable from a communication network and/or recorded on a medium readable by a computer and/or executable by a processor, comprising program code instructions for implementing a method according to any one of claims 1 to 10.

13. A non-transitory computer-readable medium comprising a computer program product recorded thereon and capable of being run by a processor, including program code instructions for implementing a method according to any one of claims 1 to 10.
